# EUROPEAN PATENT APPLICATION

(11) **EP 2 149 738 A2**
(43) Date of publication of application: **03.02.2010**
(21) Application number: 09166901.0
(22) Date of filing: 30.07.2009
(51) Int. Cl.: F17C 13/02, F16K 31/26

(54) **Device for preventing overfilling of containers, in particular containers intended to contain liquefied gases**

(30) Priority: 31.07.2008 IT PD20080234
(71) Applicant: CAVAGNA GROUP SWITZERLAND SA, 6800 Lugano (CH)
(72) Inventor: Frederiksen, Niels, 2730, HERVEL (CH)
(74) Representative: Cantaluppi, Stefano

(57) **Abstract**

A device (1) for preventing overfilling of containers (B), in particular containers intended to contain liquefied gases, comprises:
- a valve body (3) in which a gas pipe (5) is defined,
- a closure means (7) axially movable in the valve body (3) away from and towards a valve seat (8) in order, respectively, to open and to shut off the gas pipe (5),
- an actuator (16), comprising a float (20), capable of exerting a thrust (F) in order to urge the closure means (7) away from the valve seat (8),
- a cam mechanism (21) for exerting the thrust (F) on the closure means (7) in an ascending phase of the float (20) until a preimposed limit position, corresponding to a maximum filling level, is reached,
- a lever mechanism (26) for exerting the thrust (F) on the closure means in a first part of a descending phase of said float (20), starting from said limit position.

## Description

### Technical field

The subject of the present invention is a device for preventing overfilling of containers, in particular containers intended to contain liquefied compressed gases.

### Technological background

Such containers, better known as "bottles", are widely used where no connection to the combustible gas mains network is provided.

For reasons of economy and safety it is advisable for the bottles to be filled with a predefined maximum quantity of gas, avoiding overfilling and, consequently, internal over-pressures. For this reason, the bottles are provided with devices for preventing overfilling, of suitable dimensions for interrupting the flow of gas at the inlet when a desired filling level has been reached.

Devices of the type defined above are known, for example, from the production of the Applicant and comprise diaphragm type valves. Such valves are of the normally closed type and comprise a diaphragm pierced at the centre and which, by deforming under the action of the flow of gas at the inlet, permits its passage. The flow of gas is stopped when, on reaching a predetermined filling level, a piston, placed downstream of the diaphragm and actuated by means of a cam connected to a float inside the container, is forced against a seat, closing a passage cross-section for the gas. The variation of the passage cross-sections results in a counter-pressure which acts on the diaphragm in the opposite direction from that of the entry of the gas into the container, closing the inlet opening.

The drawbacks of such solutions are those which are typical of the applications of diaphragm type valves, or the greater tendency to wear and the consequent reduced reliability compared with solutions which utilise valves in which the closure means is a rigid element.

Another drawback encountered in the specific application of the devices for preventing overfilling of gas bottles lies in the fact that the diaphragm type valve thus designed renders the production of the vacuum inside the bottles difficult.

A further drawback to be found is the reduction in the outgoing gas flow rate during normal use.

Devices for preventing overfilling of gas bottles which utilise valves devoid of diaphragms are known, for example, from US Patent 4541464. In that solution the valve is of the ball type, normally open. The closure ball is maintained in the open position by means of a pin provided on a ball type member connected to a float by means of a cam type actuation means. During the filling operation, the float rises in the container so as to rotate the ball member via the cam type actuation means. The system is of such dimensions that on reaching the filled position the rotation of the ball member causes a loss of contact between the pin and the ball, which is pushed into the closure position of the valve by the force of gravity, as well as by an optional return spring.

The main drawback of such a solution lies in the fact that it is sensitive to inclination and vibration of the bottle, since the ball member rotates also as a result of any deviation of the axis of the bottle from the vertical direction.

A second problem is represented by the lack of readiness of the system, once the maximum filling level is reached in the bottle.

A further problem of such a solution consists in the number of elements of which it is composed and the use of spherical members which complicate the operations of construction and assembly, rendering the device particularly sensitive to the tolerances of dimensions and of connection. For the same reasons, the reliability in operation of such a solution is limited.

### Description of the invention

The principal aim of the invention is that of providing a device for preventing overfilling of containers, in particular containers intended to contain liquefied compressed gases, structurally and functionally designed so as to avoid all the drawbacks mentioned with reference to the prior art cited.

These and other aims which will become clear hereinafter are confronted and achieved by the invention by means of a device for preventing overfilling of containers which is produced according to the following claims.

### Brief description of the drawings

The characteristics and advantages of the invention will become clearer from the following detailed description of a preferred exemplary embodiment thereof, illustrated by way of non-limiting example with reference to the appended drawings, in which:

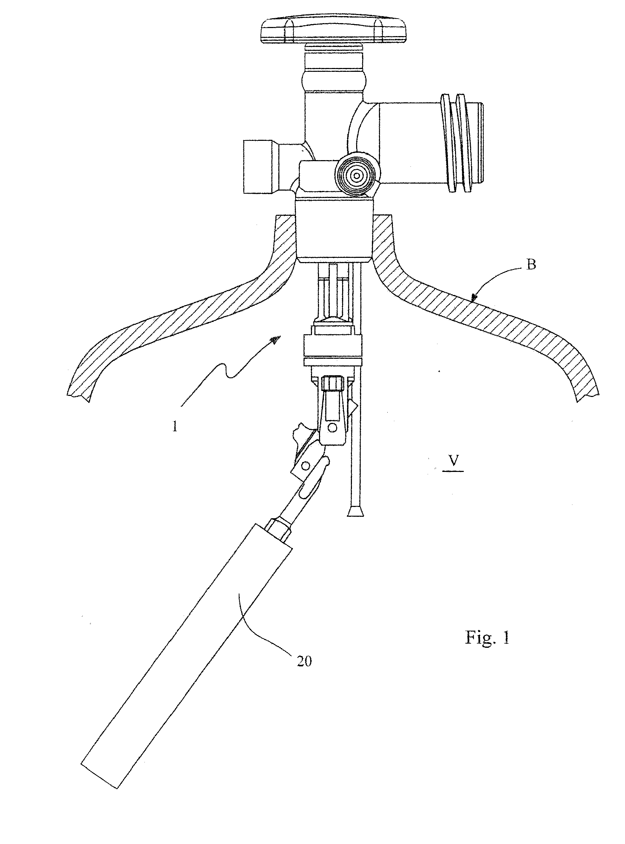

- Figure 1 is a side view of a device for preventing overfilling according to the present invention;

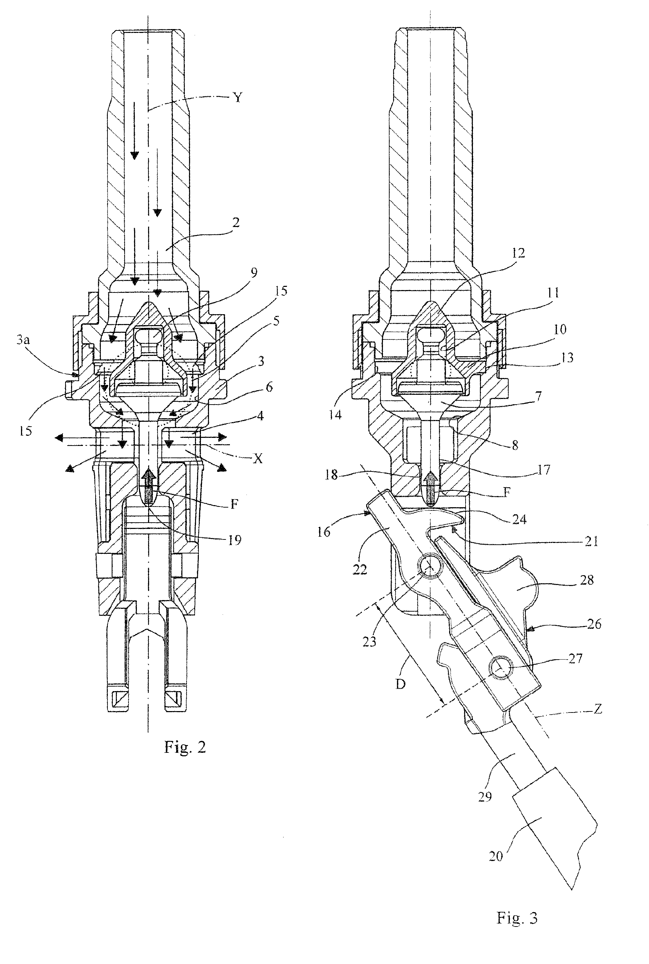

- Figure 2 is a view in front section of the device of Figure 1;
- Figure 3 is a view in lateral section of the device of Figure 1;
- Figure 4 is a sectional view corresponding to that of Figure 3, in a different operative state of the device of the present invention;
- Figures 5 and 6 are two lateral sections of two details of the device of Figure 1, in two respective operative states.

### Preferred embodiment of the invention

In the drawings, the reference 1 indicates as a whole a device for preventing overfilling of containers according to the present invention. The device 1 is intended to be fitted to a container (bottle B) for liquefied pressurised gases. The device 1 comprises an upper channel 2 having a longitudinal axis Y and connected to the discharge/filling pipe union of the bottle B.

Downstream of the pipe 2, the device 1 comprises a valve 3a, downstream of which a lower channel 4 is provided, with axis X orthogonal to the axis Y, and connected to an internal volume V of the bottle, of known cylindrical shape with convex ends, intended to receive the liquefied gas stored in the bottle B.

The valve 3a comprises a valve body 3, interposed between the channels 2 and 4, and in which a pipe 5 for gas entering the bottle is defined, extending predominantly in the direction of the axis Y. The gas pipe 5 is delimited, in the directions which are transverse to the axis Y, by an internal surface 6 of the valve body 3.

The valve 3a comprises a rigid closure means 7, of frustoconical shape with axis Y with the tapered part facing towards the channel 4, axially movable in the valve body 3 away from and towards a valve seat 8 in order, respectively, to open and to shut off the gas pipe 5.

The closure means 7 comprises a base surface facing towards the channel 2, from which rises an appendage 9, with a circular base and extending longitudinally along the axis Y.

The valve 3a further comprises a guide member 10, in which is defined a cylindrical cavity 11, with axis Y, in which the appendage 9 is slidably engaged.

The guide member 10, on the side axially opposed to the cavity 11, comprises a central ogive 12, capable of being impinged on by the flow of gas entering the bottle. The guide member 10 is integral with the valve body 3, being provided with an annular, peripheral protuberance 13, partially embedded in an annular seat 14, provided on the internal surface 6 of the valve body 3.

The annular protuberance 13 is transverse to the axis Y and is provided with a plurality of passages 15, in order to allow the flow of gas at the inlet towards the valve seat 8.

The valve 3a comprises a control stem 17, associated with the closure means 7, being made in one piece therewith. The stem 17 extends longitudinally along the axis Y, in a position axially opposed with respect to the appendage 9.

According to other variants of the present invention (not shown), in place of the valve 3a other types of valves may be used, for example valves with a diaphragm type closure means controlled by means of a longitudinally extending control stem similar to the stem 17.

The control stem 17 passes through the channel 4, upstream of which it is engaged in a cylindrical axial guide 18 integral with the valve body 3 and co-operating with the guide member 10 in order to guide the closure means 7 axially. The control stem 17 further comprises an end 19, axially opposed to the closure means 7.

The device 1 comprises an actuator 16 capable of exerting a thrust force F on the end 19 of the stem 17 in order to urge the closure means 7 away from the valve seat 8.

The actuator 16 comprises a float 20, extending in the internal volume V of the bottle B, and a cam mechanism 21 for exerting the thrust F, in an ascending phase of the float 20. The thrust F is exerted until a preimposed limit position of the float 20, corresponding to a maximum filling level of the bottle B, is reached.

The mechanism 21 comprises a member 22, secured to the valve body 3 by means of a hinge 23, and on which a cam profile 24 is defined.

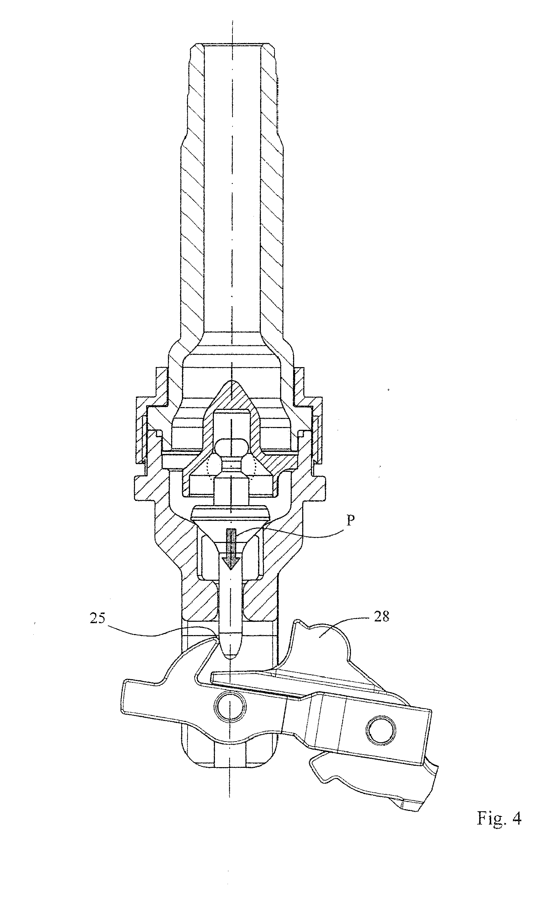

The cam profile 24 can be associated with the closure means 7 in order to exert the thrust F inasmuch as it locates the end 19 of the control stem 17. During the ascending phase of the float 20, the end 19 of the stem 17 slides on the cam profile 24, until an end point 25 (Figure 4) is reached.

The cam profile 24 is an arc of a circle with its centre on the axis of the hinge 23 so as to maintain the closure means 7 at a constant distance from the valve seat 8. The cam profile 24 is of such dimensions that when the float 20 has reached the limit position of maximum filling the end 19 is located at the point 25. In this state the thrust F can no longer be exerted and the closure means 7 is thus subjected only to the force of its own weight P, which causes the closure means 7 to fall towards the valve seat 8, in such a way as to shut off the gas pipe 5.

According to an alternative embodiment (not shown) of the present invention, the fall of the closure means 7 is urged by a return spring as well as by the weight P.

The actuator 16 additionally comprises a lever mechanism 26 for exerting the thrust F on the stem 17 in a first part of a descending phase of the float 20 starting from its limit position of maximum filling.

The lever mechanism 26 comprises a fulcrum 27, hinged to the member 22 at a distance D from the hinge 23, a first arm 28, extending from the fulcrum 27 towards the cam profile 24. The first arm 28 can be associated with the closure means 7 for exerting the thrust F, inasmuch as it locates the end 19 of the control stem 17. The fulcrum 27 is interposed between the first arm 28 and a second arm 29, integral with the float 20. The first arm 28 and the cam profile 24 are located on the same side with respect to the straight line Z, which connects the hinge 23 and the fulcrum 27.

During the ascending phase of the float 20, the arms 28, 29 are disposed in a position aligned with the member 22, such that the first arm 28 is resting on the member 22.

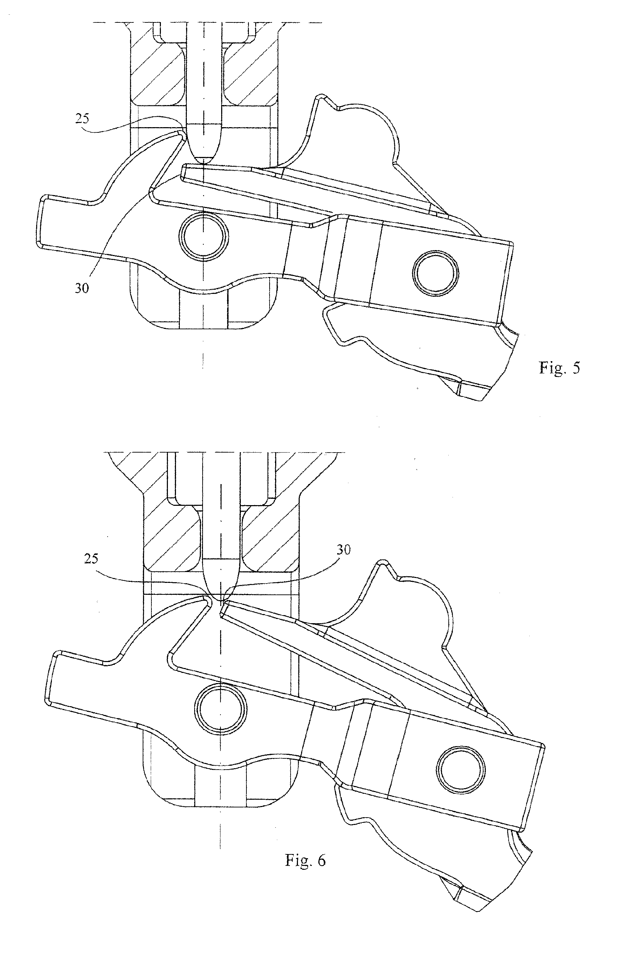

During the descending phase of the float 20, the end 19 of the stem 17 slides on the first arm 28 until an end 30 of the first arm 28 is reached at an intermediate position of the float 20 (Figure 6).

At the intermediate position of the float 20, the end point 25 of the cam profile 24 and the end 30 of the first arm 28 are adjacent to each other. Beyond the intermediate position, in a second part of the ascending phase of the float 20, the end 19 of the stem 17 bears on the cam profile 24.

The operation of the lever mechanism 26 described above thus permits the rearming of the cam mechanism 21, in such a way that the end 19 of the stem 17 bears on the cam profile 24 when the level in the bottle B is below the intermediate level, in particular when the bottle B is empty.

The present invention makes it possible to obtain a device for preventing overfilling of containers which is capable of responding promptly when the maximum filling level preimposed is reached.

Such a device is not affected by the variations in pressure during the filling of the bottle.

The reduced number of components of the valve, compared with other known solutions, makes it possible to obtain greater simplicity of the functional geometries and, consequently, fewer rejects in production and greater reliability in use.

In this way the invention achieves the aim proposed, at the same time obtaining numerous advantages, including:
- the use of a valve of the type which is always open allows improved performance with regard to the production of the vacuum in the bottles.
- the phenomenon of premature interruption of filling is reduced;
- performances do not depend on the pressure or density of the fluid treated;
- improved repetition of the filling operations, the variability of the maximum level effectively reached within the bottle being reduced in several consecutive charging operations.

## Claims

1. Device (1) for preventing overfilling of containers (B), in particular containers intended to contain liquefied gases, comprising:
- a valve body (3) in which a gas pipe (5) is defined,
- a closure means (7) axially movable in said valve body (3) away from and towards a valve seat (8) in order, respectively, to open and to shut off said gas pipe (5),
- an actuator (16) capable of exerting a thrust (F) to urge said closure means (7) away from said seat (8), said actuator (16) comprising a float (20),
**characterized in that** said actuator (16) comprises:
- a cam mechanism (21) for exerting said thrust (F) in an ascending phase of said float (20) until a preimposed limit position, corresponding to a maximum filling level, is reached,
- a lever mechanism (26) for exerting said thrust (F) in at least a first part of a descending phase of said float (20), starting from said limit position.

2. Device (1) according to claim 1, wherein said cam (21) mechanism comprises a member (22) linked to said valve body (3) by means of a hinge (23), said member (22) comprising a cam profile (24) that can be associated with said closure means (7) in order to exert said thrust (F).

3. Device (1) according to claim 2, wherein said lever mechanism (26) comprises a fulcrum (27) hinged to said member (22) in a distal position with respect to said hinge (23).

4. Device (1) according to claim 3, wherein said lever mechanism (26) comprises a first arm (28) that can be associated with said closure means (7) in order to exert said thrust.

5. Device (1) according to claim 4, wherein said first arm (28) is located, with respect to the straight line joining said fulcrum (27) and said hinge (23), on the same side as said cam profile (24).

6. Device (1) according to claim 5, wherein said first arm (28) is capable of meeting said member (22) in said ascending phase of said float (20).

7. Device (1) according to any one of claims 4, 5 or 6, wherein said lever mechanism (26) comprises a second arm (29), integral with said float (20).

8. Device (1) according to one or more of claims 2 to 7, wherein said cam profile (24) and said first arm (28) are capable of meeting a control stem (17) associated with said closure means (7) in order to exert said thrust (F).

9. Device (1) according to claim 8, wherein said end of said stem (17) slides on said cam profile (24) during the ascending phase of said float (20), until an end point of said cam profile (24), corresponding to said limit position, is reached.

10. Device (1) according to claim 9, wherein said cam profile (24) is an arc of a circle having its centre on the axis of said hinge (23).

11. Device (1) according to claim 10, wherein said end of said stem (17) slides on said first arm (28) during said first part of said descending phase, until an end of said first arm (28) is reached, at an intermediate position of said float (20).

12. Device (1) according to claim 11, wherein at said intermediate position said end point (25) of said cam profile (24) and the end (30) of said first arm (28) are adjacent to each other.

13. Device (1) according to claim 12, wherein in at least a second part of a descending phase of said float (20), starting from said intermediate position of said float (20), said stem (17) bears on said cam profile(24)
